# EUROPEAN PATENT SPECIFICATION

(11) **EP 2 555 200 B1**
(45) Date of publication and mention of the grant of the patent: **19.04.2017**
(21) Application number: 11006412.8
(22) Date of filing: 04.08.2011
(51) Int. Cl.: G11B 27/34, G11B 27/10, G06F 3/048, G06F 9/44, H04N 5/445, H04N 5/44

(54) **Means for controlling a media player for rendering of media content**
Mittel zur Steuerung eines Media-Players zum Wiedergeben von Medieninhalten
Supports de contrôle d'un lecteur multimédia pour le rendu d'un contenu multimédia

(43) Date of publication of application: 06.02.2013
(73) Proprietor: Red Bull GmbH, 5330 Fuschl am See (AT)
(72) Inventor: Gall, Andreas Dietmar, 81243 München (DE); Ferstl, Elisabeth, 5340 St. Gilgen (AT)
(74) Representative: Metten, Karl-Heinz

(56) References cited:
- EP-A1- 2 017 707
- EP-A2- 1 186 987
- WO-A1-2004/023283
- US-A1- 2002 073 124
- US-A1- 2008 062 141
- US-A1- 2010 017 361
- US-B1- 6 448 987

## Description

### Field of the Invention

The present invention relates to means for controlling a media player, to a media player and a method for controlling a media player.

### Background of the Invention

The reproduction of digital media, such as audio, video, television and/or interactive content, is becoming increasingly important in everyday life. However, since users are nearly everywhere confronted with a growing and changing number of available media content of different formats, controlling of devices for rendering the media is getting increasingly difficult. In fact, due to the large number of media, navigation and selection of a desired media content is confusing and time consuming. Also it is difficult to react on changes in the available media, such as new media content, if a media device is already set-up and configured.

Current media devices and media players, such as set-top boxes, DVD players and rendering devices for diverse media formats, generally confront the user with a number of buttons in order to browse or navigate the available media content and to select a desired media object for display. Also, user interfaces are known, that display a list of the available media content from which a user may select a desired one. However, these approaches are limited to a relatively low number of media content and are getting increasingly confusing with a growing number of available media objects. Also, new media content may not be directly added to such interfaces and requires a rearrangement of the presented available content.

US 2008/0062141 A1 is about a method for browsing images stored on a portable electronic device having a display and a user input device, said method comprising: presenting an image browser that displays a plurality of images from a group of images; transitioning through the group of images in accordance with at least one user input; selecting one of the images from the group of images following said transitioning; and subsequently performing an action associated with the selected image. The user input according to US 2008/0062141 can be a linear user input or a rotational user input, and the images are reported to be configured to move horizontally across the display device during transitioning. US 2008/0062141 A1 shall provide an improved method for browsing through content.

In EP 1 186 987 A2 an information processing apparatus is disclosed, comprising means for displaying an image; means for forming at least a part of a three-dimensional body by a plurality of panels having attached thereto images corresponding to a plurality of files or folders on a screen of the image displaying means, and displaying at least a panel by rendering the panel closest to and parallel with the screen. The teaching of EP 1 186 987 A2 shall alleviate confirming contents visually and shall improve the operability of selection.

US 6,448,987 B1 describes a method for interactively presenting a plurality of content selections to the users on a display device, said method comprises the steps of: identifying at least a first user and a second user of the plurality of users to determine the first and second users' access to the digital contents, the access to the digital contents of the first user being different than the access to the digital contents of the second user; displaying a first menu ring having a plurality of first icons arranged along a first circle, each first icon representing a category of contents, each of the first icons being simultaneously visible to the users, the first menu ring being at a first setting; subsequently rendering, in response to a first input by one of the users indicating a selection of a first icon, an animated appearance of the first menu ring rotating about an axis substantially parallel to a line of sight into the display; and subsequently displaying the first menu ring at a second setting wherein the selected first icon is at a predetermined location along the first circle; displaying, in response to the first input by one of the users, a second menu ring comprising a plurality of second icons arranged along a second circle concentric with the first circle, each second icon representing a subcategory of contents associated with the category of contents represented by the selected first icon; and determining at the time of display the categories and subcategories associated with the first and second icons displayed in the first and second menu rings based on the contents accessible to the user. Said method shall be designed for a graphic user interface for a system for delivering multiple categories of digital contents to a plurality of users, the main feature being that the menu structure for the graphic user interface comprises two or more concentric rings each representing a level of the menu system and wherein each menu ring comprises a plurality of icons identifying the menu items. The teaching of US 6, 448,987 B1 strives at presenting to the user multiple categories of entertainment and informational contents in a balanced fashion, so that each category is presented with equal prominence.

EP 2 017 707 A1 is about a widget of graphical user interface for navigating amongst related objects, wherein: i) the widget is adapted for displaying first and second groups of objects within respective first and second visually linked display areas; and ii) the widget is further adapted, upon user selection of a relation between at least an object of the second group and at least an object of a third group of objects, for displaying objects of the third group in the second display area and objects of the second group in the first display area. With EP 2 017 707 A1 an improved widget of graphical user interface for navigating amongst related objects shall be provided.

Therefore, it is an object of the present invention to provide an approach for controlling a media player that avoids the aforementioned problems, in particular, to provide a flexible approach, which allows for a fast navigation and selection of media content to be rendered on a media player.

### Summary of the Invention

This problem is solved by the means for controlling a media player for rendering of media content according to the features of claim 1, the media player for rendering of media content according to the features of claim 7, and the method for controlling a media player for rendering of media content according to claim 9. Preferred embodiments are defined in the dependent claims.

According to the present disclosure, means for controlling a media player for rendering of media content, having two or more interaction levels including an active interaction level are provided. Each interaction level comprises a plurality of items corresponding to characteristics of media content, wherein said items of at least some of the interaction levels are arranged on a path. The active interaction level is coupled to an input device having a circular input element and a linear input element, and a predetermined number of the items of the active interaction level are provided as a group of selectable items including a focused item on at least a section of the path. Said means are configured to modify the group of selectable items by removing a number of items from the group, adding a respective number of items of the active interaction level to the group, and changing the focused item in response to a control signal originating from the circular input element of the input device, and further to enable a next one of the two or more interaction levels in response to a control signal originating from the linear input element of the input device and based on the focused item.

The media player may be configured to render a variety of media content, which may comprise a plurality of media objects, each of which may be related to several characteristics, such as a title, one or more key words describing the content and snapshots related to the content, just to name a few. In order to navigate through the available media content, the means for controlling a media player for rendering a media content provide a navigational structure, comprising at least two interaction levels, wherein each interaction level allows for determination of some characteristics through selection of one of its items, thereby narrowing the group of available media content and eventually leading to selection of a desired media content for rendering.

According to an embodiment of the present disclosure, the items of at least some of the interaction levels are arranged on a path, wherein in an active interaction level only a predetermined number of the items are provided as a group of selectable items. In order to find and choose an item corresponding to desired media characteristics, the group of selectable items of the active interaction level is directly coupled to an input device with a circular input element, such that the group of selectable items is responsive to control signals of the input device. In particular, control signals originating from the circular input element may directly affect a modification of the group of selectable items and the focused item therein, which are arranged on the path that preferably corresponds to the form of the circular input element. Thus, the means for controlling a media player for rendering a media content provides an effective mapping between the input device and the active interaction level, allowing for an intuitive and rapid selection of the desired media content. Therefore, control of and the interaction with the media player is greatly simplified.

Furthermore, even though an interaction level may comprise several items, only a predetermined number of selected items is being presented in the active interaction level in the group of selectable items on at least a section of the path. Therefore, due to the reduced number of presented items, the complexity at a given time is reduced without restricting the navigational capabilities, since the group of selectable items may be quickly and intuitively modified and adapted to the search criteria through the circular input element of the input device.

The interaction levels may be arranged in a hierarchical order, such that a top interaction level, which preferably comprises items arranged and presented on a path, such as a closed path, preferably a circular or elliptical path, may enable a subsequent interaction level by selecting the focused item via the linear input element of the input device. Thereby, the navigation of the media content is narrowed to a group of media, all satisfying the characteristics defined by the selected item. Preferably, also the items of the subsequent interaction level may be arranged and presented on a path, such as a closed path, depending on the complexity and amount of the items of that level. Thus, for example, the items of the two top interaction levels of the hierarchy may be presented on a closed path. By using several, preferably hierarchical interaction levels the available media content may be easily browsed and the media player may be quickly configured to render the desired media object.

The present invention allows for an advantageous control of a media player, enabling rendering of a large amount of media content by optimizing the selection of the available media content through multiple interaction levels that present the selection criteria as items arranged on a path, wherein the interaction levels are directly mapped on the corresponding circular input element of the input device. In particular, the present invention provides a fast navigation to the desired media content, an intuitive control via the input device, and a flexible navigational structure.

In a particularly preferred embodiment the path is a closed path, in particular a revolving path, including one of a circular, elliptical, or polygonal path. A closed path may be any path having a front and an end that are connected to each other. Thus, a closed path enables repeated cycles through all of the items arranged on the closed path. The items on the closed path may be arranged at corners, connected by at least partially straight edges forming a polygonal path. Also, the path may comprise rounded portions at the corners. Furthermore, the closed path may be a revolving path without any self-intersections of the path, having a revolving polygonal shape or a rounded shape such as a circular or elliptical path. Such circular or circumferential arrangement of the items on a closed path in at least some of the interaction levels allows for a fast adaptation of the navigational structure to new available media content. For example, new content may be added at a position, which does not belong to the group of selectable items in the respective interaction level. Also, such an arrangement of the items allows for a direct mapping of the items of the active interaction level to the circular input element of the input device, leading to an intuitive and clear control of the media player.

According to a preferred embodiment the active interaction level is deactivated and the next enabled interaction level is activated and coupled to the input device. Each interaction level may provide an interface through which control signals of the input device are received in order to modify the group of selectable items and to eventually select the focused item. When the next interaction level is enabled, the data path
providing the control signals to the interface of the active interaction level may be decoupled, thereby deactivating the active interaction level. Subsequently, the data path may be coupled to the interface of the next enabled interaction level, which becomes the active interaction level. The newly activated interaction level may be required to acknowledge the activation. Preferably, all control signals generated during deactivation and activation of the interaction levels may be temporarily buffered and provided to the interface of the newly activated interaction level as soon as the activation has been acknowledged. As an alternative, all control signals generated during activation of a new interaction level may be discarded. Upon activation of the next enabled interaction level, an initial group of selectable items of that level may be arranged on at least a section of the corresponding path and a focused item may be identified. For example, the means may be coupled to a buffer storing indications about items which have been previously included in the group of selectable items during the last activation of the newly activated interaction level. Similarly, each interaction level may also itself comprise or communicate with a buffer in order to memorize the last configuration of the group. Alternatively, all items in each interaction level may comprise an identification, according to which the items may be arranged on the path, and the group of selectable items is determined as the first number of items according to this order.

Preferably, the means are further configured to initiate rendering of media content in response to a control signal originating from the linear input element and based on the focused item corresponding to the media content. Consequently, the items of a last interaction level in the hierarchy may directly relate to a particular media content. Preferably, the items of the last interaction level may be presented as a list of selectable media content, also providing indications related to the characteristics, such as a title and snapshots of the content. The items of the final interaction level may also specify a link to the media content, such as a file name and path, a server address and port, or any other suitable indication of a source providing access to the desired media content. Thus, by creating the control signal through the linear input element, the characteristics of the focused item are retrieved and a request for the desired media content is transferred to the indicated media source in order to initiate the rendering of the media content.

Preferably, the focused item corresponds to a media stream and said means are further configured to request streaming of the media stream.

According to a particularly preferred embodiment the circular input element of the input device comprises a plurality of latching positions corresponding to fixed orientations of the circular input element, wherein a rotation of the circular input element from one latching position to an adjacent latching position generates a control signal originating from the circular input element. Preferably, the circular input element comprises a rotatable ring or a disc, and the latching positions may be defined as fractions of the perimeter of the circular input element. Preferably, the latching positions are arranged on the perimeter having the same angular distance between each other. The circular input element may comprise further means to generate a feedback, such as a visual, haptic or audio feedback, whenever the circular input element is rotated to or over a latching position. By rotating the circular input element over a plurality of latching positions, the input device may generate a corresponding number of control signals. Preferably, the circular input element may comprise any suitable number of latching positions, preferably related to the predetermined number of items of a group of selectable items of one of the interaction levels presented on the path, preferably on a circular or elliptical path. For example, the circular input element may comprise 4 to 60, and preferably 12 to 40 latching positions. Yet, embodiments of the present disclosure are not restricted to a particular number of latching positions.

In another embodiment the control signal of the circular input element further comprises data related to a rotational speed of the circular input element. The rotational speed may be encoded as a numerical value in the control signal. Also, the rotational speed may be determined from the amount of latching positions rotated over during a given period of time.

Preferably, the number of items removed from and added to the group of selectable items is determined base on the rotational speed, such that the speed of changing the focused item in the group of selectable items corresponds to the rotational speed of the circular input element. For example, if the rotational speed of the input element is below a certain threshold, one item may be added to and removed from the group of selectable items whenever the means for controlling receive the control signal. However, if the circular input element is rotated with a rotational speed exceeding the threshold, the amount of items removed from and added to the group may be increased accordingly, in order to speed up the modification of the group and changing of the focused item. Also, if the rotational speed of the input element is below the threshold, the means may buffer all received subsequent control signals and supply the control signals to the active interaction level one by one after the interaction level has completed processing of the current control signal. However, if the rotational speed exceeds the threshold, subsequent control signals may be discarded until the interaction level completes the processing of the current control signal. By adjusting the speed of changing the focused item in the group of selectable items to the rotational speed of the circular input element, a one-to-one mapping between the items of the interaction level and the input device may be provided, leading to an intuitive and fast configuration of the media player.

According to a preferred embodiment the circular input element comprises a rotatable ring and the linear input element comprises a button. Preferably, the rotatable ring is arranged on a surface of the input device and rotated around a rotational axis which is approximately perpendicular to the surface. The button may be arranged on the same surface of the input device and may be pushed approximately along the rotational axis. Preferably, the button is arranged in the centre of the rotatable ring, such that the rotatable ring may be rotated around the button. However, the button may also be arranged on a different surface of the input device and in a distance to the rotatable ring, such as on a side of the input device. Yet, the present invention is not restricted to a particular arrangement of the circular and linear input elements.

In a further preferred embodiment of the present invention, the next enabled interaction level is arranged circumferential to and outside of the active interaction level. Furthermore, the next enabled interaction level is presented in combination with the currently active interaction level. Also, when the next interaction level is enabled, the presentation of the currently active interaction level may be modified, such that only a part of the currently active interaction level is presented. For example, the selected focused item and the adjacent items on the path of the group of selectable items can be presented in combination with the next enabled interaction level. This arrangement greatly facilitates the navigation of the available media content, since the characteristics selected in the previous interaction level are directly provided in combination with the selectable items on the next enabled interaction level.

According to the present invention, only the items of the group of selectable items are presented on at least a section of the path and the remaining items of the active interaction level are hidden. The selectable items may be equidistantly spaced apart on the presented section of the path irrespective of the actual number of items of the interaction level and the length of the path. For example, an interaction level may comprise 15 or more items and the group of selectable items may comprise 5 items, which may be presented on a section of an elliptical path covering more than a half of the circumference of a corresponding ellipse. Thus, the remaining elements may be hidden on a much shorter section of the remaining path, which does not correspond to the number of the hidden elements. By providing a relatively large section of the path for display of a relatively low number of selectable items the available content may still be presented in a clear way even if an interaction level comprises a large number of items.

With the present invention the group of selectable items is presented within a predetermined area, while the items of the active interaction level are moved along the path into and out of the predetermined area in response to the control signal originating from a circular input element. Preferably, the focused item may be presented in a center of the predetermined area or in a central position of one direction of the predetermined area. However, as an alternative, also the items of the active interaction level may remain fixed, while the group is moved along the path, which may preferably be a revolving path, such as a circular or elliptical path.

According to the present invention, the means are further configured to receive data related to characteristics of media content and to assemble the items of each interaction level according to the data. The received data specify newly added media or a group of media objects by specifying the characteristics of the
media content, such as keywords and tags, which are preferably related to the hierarchical interaction levels of the navigational structure. According to the received data, new items are added to one or more of the interaction levels in order to allow navigation to the new media content. New items in an active interaction level are added between the hidden items. Also, the means may be configured to create an additional interaction level for the media content specified in the received data. The received data may also comprise the data about the entire media content available for display on the media player. In this case the existing interaction levels may be traversed to determine, if items corresponding to the characteristics of each new media object are already included in the interaction levels. Alternatively, the navigational structure may be initially reset and re-built based on the received data. Consequently, the means may be configured to initially receive data about all available media objects and subsequently assemble the hierarchical interaction levels and its items according to the data.

Furthermore, according to the present invention a media player for rendering of media content including means according to an embodiment of the present invention is provided, wherein said media player further comprises an input to receive control signals generated by the input device and at least one output to provide data for rendering of media content.

In a preferred embodiment of the invention, the media player further comprises a network connection configured to receive media content from a server, and a storage device configured to pre-buffer the media content. The media player may receive via the network connection from the server or a computing environment, such as a content-management system, a list of the media content available for the media player and may start downloading the available media content to the local storage device. In addition, the media player may as well provide the information about the available media content to the means for controlling which starts assembling the items of each interaction level according to the received data. During navigation, if an item on a particular interaction level has been selected, which further specifies the possible desired media content, the media player may request the corresponding media objects from the server and start downloading and pre-buffering the media content. This operation may be aborted, if the current interaction level is being discarded and another item has been selected on a previous interaction level. Therefore, if a particular media content is being selected at a last interaction level, the media player may immediately start rendering the pre-buffered media content.

Preferably, the media player may also use the network connection to initiate streaming of a media stream at the server or a server infrastructure, such as a content-distribution network, based on the characteristics defined by the focused item selected via the linear input element of the input device. The server may start streaming the media stream, which may be pre-buffered in the storage device of the media player. Therefore, preferably the rendering of the media stream is delayed until a sufficient amount of stream data is being received at the media player in order to bridge a temporarily low network capacity during rendering of the media stream with the pre-buffered data. Alternatively, the media player may immediately start rendering the media stream and the media stream received in advance due to a sufficient network bandwidth may be pre-buffered in the storage device.

In yet another preferred embodiment of the present invention, the media player further comprises one or more output devices coupled to the at least one output for rendering of the media content.

Preferably, the input device is a remote control and the output devices include a display device. The remote control may be any kind of wireless remote control, for example using RF4CE or other wireless communication technology to communicate the control signals to the media player. However, it is to be understood that the invention is not restricted to a particular remote control and the applied communication technology. Also, the output devices may include a display device, such as a monitor, TV or other flat-screen device as well as a projector or similar equipment for displaying video data. The output devices may also comprise further display devices, such as an array of display devices. The output devices may also comprise audio devices and further output devices for other modalities.

According to a particularly preferred embodiment of the present invention, the means for controlling are provided as a graphical user interface, rendered on the display device, wherein the interaction levels and the respective items are presented as graphical primitives, such as two or three dimensional graphical objects, meshes and other suitable representations. It is to be understood, that the user interface may also be presented on a different output device, such as a haptic output device, and parts of the user interface may also be realized as hardware components manipulated by a user.

Furthermore, according to the present invention, a method for controlling a media player for rendering of media content is provided. According to the inventive method, two or more interaction levels including an active interaction level are provided, each interaction level comprising a plurality of items corresponding to characteristics of media content, and the items of at least some of the interaction levels are arranged on a path. The active interaction level is coupled to an input device having a circular input element and a linear input element and in the active interaction level a predetermined number of the items are provided as a group of selectable items including a focused item on at least a section of the path. The group of selectable items is modified by removing a number of the items from the group, adding a respective number of items of the active interaction level to the group, and changing the focused item in response to a control signal originating from the circular input element of the input device. Furthermore, based on the focused item, a next one of the two or more interaction levels is enabled in response to a control signal originating from the linear input element of the input device.

By allowing the control of a media player by selecting media content through a navigational structure comprising a plurality of interaction levels having items defining characteristics of the media content arranged on a path, such that an active interaction level is directly coupled to and mapped on a circular input element of an input device, the navigation through the available media content and selection of a desired media content is greatly simplified, leading to an easier and faster configuration and adaptation of the media player. Also, since only a predetermined number of selectable items is presented in a group at a particular time, which is modified and controlled by the input device, the navigation in each interaction level and the overall interaction with the media player are greatly simplified. Moreover, new items corresponding to newly added media content may be easily included in the navigational structure. Thus, the inventive method optimizes the control of the media player.

In a particularly preferred embodiment of the present invention, the path is a closed path, in particular a revolving path, including one of a circular, elliptical, or polygonal path. In particular such circumferential arrangement and presentation of the items allows a direct mapping of the items of the active interaction level to the circular input element, thereby facilitating interaction with and control of the media player.

According to a preferred embodiment of the present invention, said enabling the next interaction level further comprises deactivating the active interaction level, activating the next enabled interaction level, and coupling the next enabled interaction level to the input device.

In yet another preferred embodiment of the present invention, the method further comprises, based on the focused item corresponding to a media content, initiating rendering of the media content in response to a control signal originating from the linear input element.

Preferably, said initiating comprises requesting streaming of a media stream based on the focused item corresponding to the media stream.

In a further preferred embodiment of the present invention, the method further comprises rotating the circular input element from a latching position to an adjacent latching position to generate a control signal originating from the circular input element, wherein the latching positions correspond to fixed orientations of the circular input element.

According to a particularly preferred embodiment of the present invention, the group of selectable items is modified based on a rotational speed of the circular input element specified by the control signal.

Preferably, the number of items removed from an added to the group is determined based on the rotational speed, such that the speed of changing the focused item in the group of selectable items corresponds to the rotational speed of the circular input element. According to a further embodiment of the present invention, the method further comprises arranging the next enabled interaction level circumferential to the active interaction level.

Preferably, the method further comprises presenting only the items of the group of selectable items on at least a section of the path and hiding the remaining items of the active interaction level.

In yet another preferred embodiment of the present invention, the method further comprises presenting the group of selectable items within a predetermined area, while the respective items of the active interaction level are moved along the path into and out of the predetermined area in response to the control signal originating from the circular input element.

In a further embodiment of the present invention, the method further comprises receiving data related to characteristics of media content and assembling the items of each interaction level according to the data.

Furthermore, a computer program product according to the present invention comprises one or more computer-readable media having program code means stored thereon, wherein said program code means when installed and executed on a media player, cause the media player to perform a method according to an embodiment of the present invention.

### Brief Description of the Drawings

Further details and characteristics of the invention are described below in exemplifying embodiments of the invention in conjunction with the drawings in which:
- Fig. 1: shows a schematic illustration of means for controlling a media player for rendering of media content according to an embodiment of the present invention;
- Figs. 2 to 4: illustrate a representation of an interaction level of means for controlling the media player according to an embodiment of the present invention; and
- Fig. 5: shows a flow chart of a method according to an embodiment of the present invention.

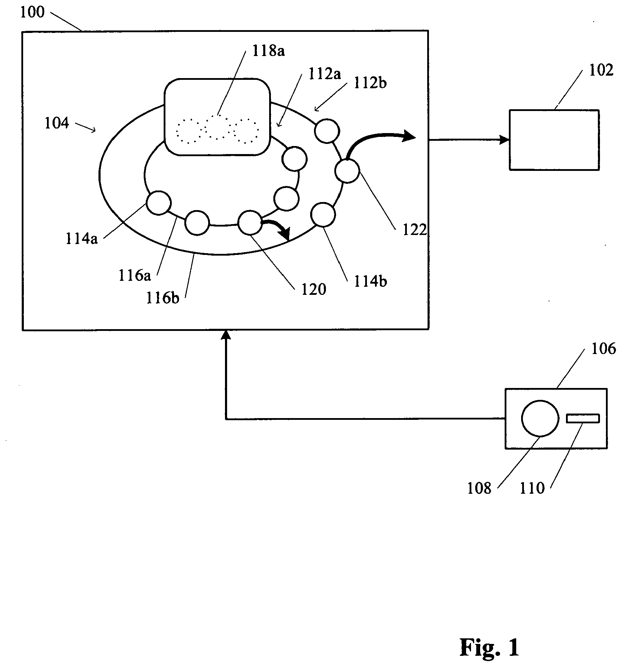

Fig. 1 shows means for controlling a media player in combination with a media player according to a preferred embodiment of the present invention. The media player 100 is coupled to an output device 102, which is capable of rendering media content. The media player 100 is controlled by means 104 according an embodiment of the present invention. The media player 100 is further coupled to an input device 106 generating control signals, which are received by the media player 100 and provided to the means 104.

The input device 106 comprises a circular input element 108 and a linear input element 110. Even though the circular and linear input elements 108, 110 are shown in Fig. 1 as two separate input elements, they may as well be preferably combined, for example such that the linear input element 110 is arranged in the center of the circular input element 108 forming a push-button surrounded by a rotatable ring.

The means 104 for controlling the media player 100 comprise a plurality of interaction levels 112a, 112b of which only two interaction levels are shown. Each of the interaction levels 112a, 112b comprises a plurality of items 114a, 114b arranged on an elliptical path 116a, 116b. In each interaction level 112a, 112b only a predetermined number of items 114a, 114b are shown and the remaining items, for example items 118a of interaction level 112a are hidden. For example, only five items 114a are presented in interaction level 112a and three items 118a are hidden. Similarly, only three items 114b of the interaction level 112b are shown in Fig. 1.

The input device 106 is coupled to an active interaction level, such as the interaction level 112a. As a result thereof, a control signal generated by rotating the circular input element 108 causes a corresponding rotation of the items 114a on the elliptical path 116a. In particular, when the circular input element 108 is rotated, one of the items 114a, for example the leftmost item, is hidden and a hidden item 118a, for example the rightmost item, is displayed on the elliptical path 116a, if the circular input element 108 is rotated clockwise. One of the items 114a represents a focused item 120, which is changed accordingly to the rotation of the circular input element 108.

The focused item 120 may be selected by using the linear input element 110 of the input device 106, for example by pushing a button of the linear input element 110 which generates a control signal provided to the means 104 and to the active interaction level 112a. When selected, the characteristics of media content specified by the focused item 120 are retrieved and a next interaction level 112b may be determined and enabled according to these characteristics, such as indicated by the arrow between focused item 120 and interaction level 112b. Preferably, all items 114b of the enabled interaction level 112b fulfill the characteristics defined by the selected focused item 120. For example, focused item 120 may specify that the desired media content represented by the next interaction level 112b has to belong to a certain category of media, such as sports, culture, news and others. The enabled interaction level 112b is presented circumferential to the interaction level 112a such that interaction level 112a remains visible. Thereafter, the active interaction level 112a is deactivated and the enabled interaction level 112b is activated and coupled to the input device 106, such that all further control signals from the input device 106 are directed to the newly activated interaction level 112b.

As shown in Fig. 1, the items of interaction level 112b may thereafter be directly controlled and selected using the input device 106. By changing and selecting the focused item 122 of interaction level 112b the media player may be configured to directly render a particular media content, as indicated by the arrow from focused item 122. In particular, rendering of a media content is initiated if focused item 122 directly represents a particular media content, for example by indicating a source and identification of the media content. It is apparent, that the selected media content fulfills all characteristics of the previously selected focused items 120, 122 of interaction levels 112a, 112b.

It is to be understood, that the present invention is not restricted to a particular number of interaction levels or a particular arrangement of the items of the interaction levels on either a circular or elliptical path only. For example, two or more interaction levels may be provided for selection of characteristics of media content and a final interaction level may as well be presented as a linear list of the respective items specifying a particular media content.

If new media content is available for the media box 100, corresponding data may be provided to the media box 100, for example via a network connection (not shown), indicating characteristics of each new media content. The means 104 may extract the characteristics from the data and generate new items for the respective interaction levels 112a, 112b. Preferably, new items are inserted on the elliptical path 116a, 116b between the currently hidden items 118a. However, the new items may also be inserted at a different position in the visible area of the interaction level 116a and the peripheral items 114a of the interaction level may be correspondingly moved to the hidden area.

Each interaction level 112a, 112b may be implemented in software or dedicated hardware as a circular list or doubly linked list comprising pointers to respective objects defining the characteristics of media content. By selecting an item 114a, 114b, the characteristics are retrieved from the object by the means 104. The data is thereafter used to determine the next interaction level 112a, 112b to be presented. To this end, each interaction level 112a, 112b may also be implemented in software or dedicated hardware as an object, providing at least a method which accepts a list of characteristics as parameters and returns a Boolean value or a probability in order to indicate if the characteristics specified by the selected item 120, 122 match the characteristics of the interaction level 112a, 122b represented by this object. The objects for each item may also comprise a member which may directly specify a media content to be rendered, such as by storing an identification or file name, as well as a server name or a network identification specifying the location of the desired media content in a network. The means 104 may thereafter configure the media player 100 to retrieve and render the media content on the output device 102. Even though a preferred software technical implementation has been described related to an object-oriented design, it is to be understood that the present invention may also be practiced differently following another approach in software and/or hardware.

The media player 100 may be a general media box or set-top box for displaying media content, such as an IPTV box for displaying TV streams received via a network. In general, the media player 100 may comprise a processor, a memory, a hard disk, a network interface, an interface for receiving the control signals of the input device 106 and further interfaces, which may enable initialization and authentication of the media player 100, such as a USB interface and others. Preferably, the components of the media player 100 are operably coupled to each other. The means 104 for controlling the media player 100 can be implemented as software, hardware or as a combination thereof. When implemented as software, the means 104 may be preferably enabled by one or more processing units, such as a processor, processor core(s) or dedicated processing hardware, comprised in the media player 100. The means 104 may as well be represented as a graphical user interface, which is displayed on a display device, such as the output device 102. However, it is to be understood that at least parts of the means 104 may as well be implemented using other hardware or output devices, such as acoustic or haptic devices.

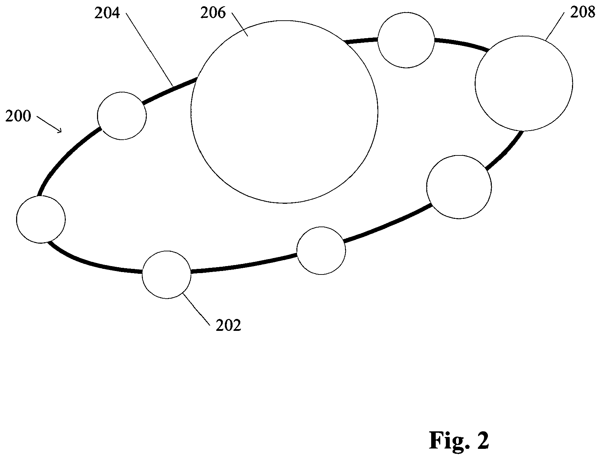

Figs. 2 to 4 show an embodiment of means for controlling a media player according to the present invention. Accordingly, the same reference numbers are used throughout the Figs. 2 to 4. Fig. 2 shows an interaction level 200 comprising a plurality of items 202 arranged on an elliptical path 204 surrounding a central element 206. The items 202 may show a short description of characteristics of media content they are corresponding to, such as a media category like sports, culture or news and others. By using a circular input element the items 202 may be rotated along the elliptical path 204, such that items 202 adjacent to the central element 206 are hidden, while previously hidden items appear on the elliptical path 204 in proximity of the central element 206.

One of the items presented in the interaction level 200 is denoted as a focused item 208, which may have a larger size than the remaining items 202 of the interaction level 200. The focused item 208 is changed corresponding to the rotation of the remaining items 202 on the elliptical path 204. Preferably, the current focused item 208 is always displayed in the same position.

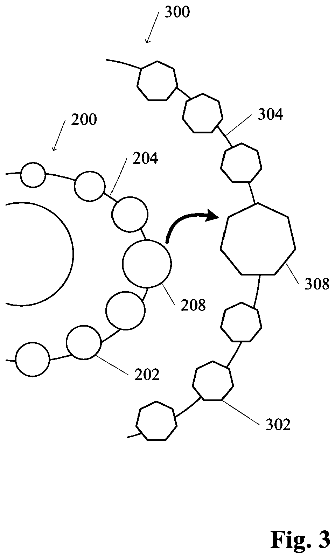

By selecting the focused item 208, a next interaction level 300 comprising items 302 on an elliptical path 304 may be presented, as shown in Fig. 3. Preferably, the next interaction level 300 is selected based on characteristics defined by selected focused item 208, such that all of the items 302 of the interaction level 300 are related to media content characterized by selected item 208. For example, selected item 208 may refer to media in the sports category and, correspondingly, all items 302 of the interaction level 300 may relate to a particular category of sports, such as motor sports, winter sports or adventure sports to name some.

After selection of the focused item 208 the next interaction level 300 is activated and the interaction level 200 is deactivated. However, as shown in Fig. 3, at least a part, such as at least the selected focused item 208 of interaction level 200 may remain visible and is not entirely replaced by the enabled interaction level 300. Preferably, the next interaction level 300 may be presented circumferential or at least partially circumferential to the interaction level 200 or the respective part of the interaction level 200. The items 302 of the new interaction level 300 may be only presented on a part of the elliptical path 304, such as the section shown in Fig. 3.

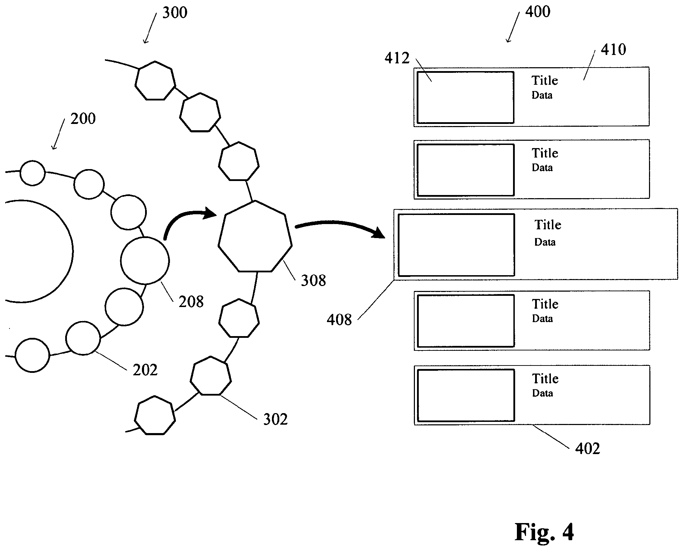

By selecting a focused item 308 which may, as well, be presented larger in comparison to the remaining items 302 of the interaction level 300, a next interaction level 400 may be presented according to the characteristics specified by the selected focused item 308, as shown in Fig. 4. As shown, the interaction level 400 may be presented as a linear list of items 402 relating to particular media objects which are available for display and which fulfill the characteristics specified by the previously selected focused items 208 and 308 of the interaction levels 200 and 300, respectively. Similar to the items 202, 302 each item 402 may represent features and characteristics of the media object to be rendered, such as keywords, a title 410 and a snapshot 412 to name some. However, in contrast to the items 202, 302 of the preceding interaction levels 200, 300 the items 402 may also specify a source for the referenced particular media content, such that the means may initiate rendering of the media content if one of the items 402 is selected.

It is to be understood, that the present invention is not restricted by the use of interaction levels presented as a linear list, such as the interaction level 400. Rather, a selection of particular media objects may as well be done through an interaction level having items arranged on a circular or elliptical path, similar to the interaction levels 200, 300. Also, it is to be understood that the items 202, 302, 402 of respective interaction levels 200, 300, 400 may be visualized according to a similar design or may even visually differ from each other. Hence, the present invention is not restricted to a particular visualization or design of the respective items 202, 302, 402.

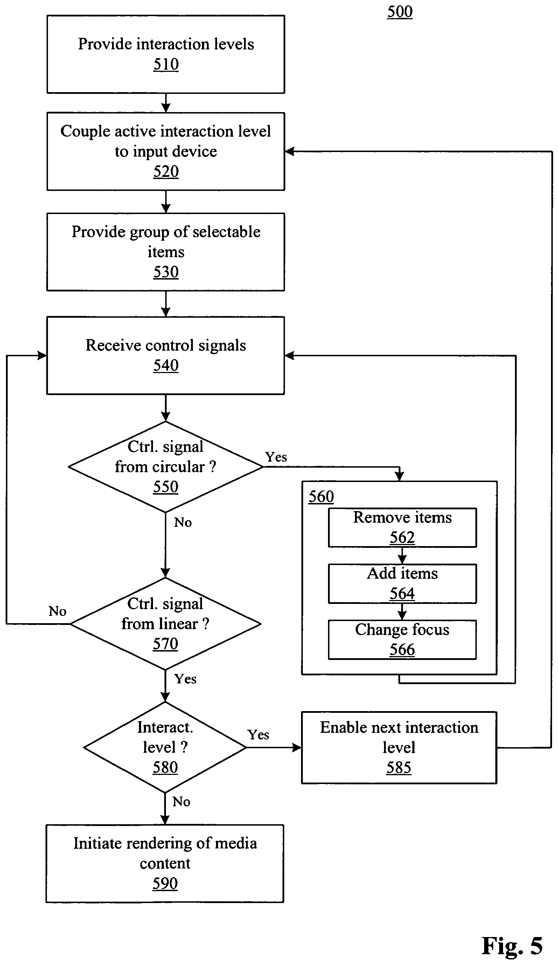

Fig. 5 shows a flow chart of a method for controlling a media player for rendering of media content according to an embodiment of the present invention.

The method 500 starts by providing 510 two or more interaction levels such that each interaction level comprises a plurality of items corresponding to characteristics of media content, wherein the items of at least some of the interaction levels are arranged on a path, such as a closed path, preferably a circular or elliptical path. In step 520, an active interaction level is coupled to an input device having a circular input element and a linear input element. In a next step 530, a predetermined number of items are provided in the active interaction level as a group of selectable items and one of the items is marked as a focused item.

In step 540 control signals generated by the input device are received. If a control signal is received, the origin of the control signal is determined. Responsive to a control signal originating from the circular input element of the input device, as determined in step 550, the group of selectable items of the active interaction level is modified 560. In particular, the modification 560 includes removing 562 a number of items from the group of selectable items and adding 564 a respective number of items of the active interaction level to the group. Also, the focus on one of the items of the group of selectable items is changed 566. After the modification 560 of the group of selectable items has been completed, the method 500 continues to receive 540 further control signals.

If a control signal from the linear input element has been received, as determined in step 570, the characteristics specified by the focused item are analyzed and, in step 580, it is determined if a next interaction level is to be used in order to navigate through the media content. If a further level is to be used, the next interaction level is enabled in step 585. Subsequently, the active interaction level is deactivated and the next interaction level is media content is to be rendered, the rendering of the corresponding media object is initiated in step 590 and the method 500 ends.

It is to be understood that the present invention is not restricted to a particular order of the processing steps as presented with regard to the exemplifying method 500 and that further method steps may be added in a different order or that method steps may be omitted in order to control the media player. Also, the method steps may be exercised in an order differently from the steps described.

Even though the inventive approach has been described with regard to exemplifying embodiments, various modifications may be carried out on the described example method, media player and means for controlling the media player without leaving the scope of the invention. Consequently, the invention may be practiced within the scope of the claims differently from the examples described.

## Claims

1. Means for controlling a media player for rendering of media content, having tw
o or more interaction levels (112a, 112b)
including an active interaction level (112a),
each interaction level (112a, 112b) comprising a plurality of items (114a, 114b) corresponding to characteristics of media content,
said items (114a, 114b) of at least some of the interaction levels (112a, 112b) being
arranged on a circular, elliptical or polygonal path (116a, 116b), wherein the active interaction level (112a) is coupled to an input device (106)
having a circular input element (108) and
a linear input element (110), and
a predetermined number of the items of the active interaction level (112a) are provided
as a group of selectable items
including a focused item (120)
on at least a section of the path (116a),
said means (104) being configured to modify the group of selectable items by
removing a number of items from the group,
adding a respective number of items of the active interaction level to the group, and changing the focused item (120)
in response to a control signal originating from the circular input element (108) of the input device (106), and
said means being further configured to enable a next one (112b) of the two or more interaction levels (112a, 112b)
in response to a control signal originating from the linear input element (110) of the input device (106) and
based on the focused item (120) and wherein
the next enabled interaction level (112b) is arranged circumferential to and outside of the active interaction level (112a), and wherein
the next enabled interaction level (112b) is presented in combination with the currently active interaction level (112a), wherein
only the items of the group of selectable items are presented on at least a section of the path (116a) and
the remaining items (118a) of the active interaction level (112a) are hidden, and
wherein the group of selectable items is presented within a predetermined area, while the items (114a) of the active interaction level (112a) are moved along the path (116a) into and out of the predetermined area in response to the control signal originating from the circular input element (108), and wherein
said means (104) is further configured to receive data related to characteristics of media content and to assemble the items of each interaction level (112a, 112b) according to the data, wherein the received data specifies newly added media or a group of media objects by specifying the characteristics of the media content, wherein in accordance with the received data new items are added to the active interaction level between the hidden items in order to allow navigation to the new media content.

2. Means according to claim 1, wherein the path (116a, 116b) is a closed path, in particular a revolving path, including one of a circular, elliptical, or polygonal path.

3. Means according to claim 1 or 2, wherein the active interaction level (112a) is deactivated and the next enabled interaction level (112b) is activated and coupled to the input device (106).

4. Means according to one of the preceding claims, further configured to initiate rendering of media content in response to a control signal originating from the linear input element (110) and based on the focused item (122) corresponding to the media content, wherein the focused item (122) corresponds to a media stream and said means (104) are further configured to request streaming of the media stream.

5. Means according to one of the preceding claims, wherein the circular input element (108) of the input device (106) comprises a plurality of latching positions corresponding to fixed orientations of the circular input element (108), wherein a rotation of the circular input element (108) from one latching position to an adjacent latching position generates a control signal originating from the circular input element (108).

6. Means according to one of the preceding claims, wherein the control signal of the circular input element (108) further comprises data related to the rotational speed of the circular input element (108), wherein the number of items removed from and added to the group is determined based on the rotational speed, such that the speed of changing the focused item (120, 122) in the group of selectable items corresponds to the rotational speed of the circular input element (108).

7. A media player for rendering of media content, including means (104) according to one of the preceding claims, said media player (100) further comprising an input to receive control signals generated by the input device (106) and at least one output to provide data for rendering of media content.

8. The media player of claim 7, further comprising a network connection configured to receive media content from a server, a storage device configured to pre-buffer the media content, and one or more output devices (102) coupled to the at least one output for rendering of the media content, wherein the input device is a remote control, the output devices (102) include a display device and the means (104) for controlling are provided as a graphical user interface, rendered on the display device.

9. A method for controlling a media player for rendering of media content according to claim 7 or 8 comprising the steps of:
providing (510) two or more interaction levels including an active interaction level, each interaction level comprising a plurality of items corresponding to characteristics of media content;
arranging the items of at least some of the interaction levels on a circular, elliptical or polygonal path;
coupling (520) the active interaction level to an input device having a circular input element and a linear input element;
providing (530) in the active interaction level a predetermined number of the items as a group of selectable items including a focused item on at least a section of the path;
modifying (560) the group of selectable items by removing (562) a number of items from the group, adding (564) a respective number of items of the active interaction level to the group, and changing (566) the focused item in response (550) to a control signal originating from the circular input element of the input device; and
based on the focused item, enabling (585) a next one of the two or more interaction levels in response (570) to a control signal originating from the linear input element of the input device
providing (530) the next one of the two or more interaction levels and providing in the next one interaction level a predetermined number of items and arranging these items on a circular, elliptical or polygonal path circumferential to and outside of the active interaction level,
presenting only the items of the group of selectable items on at least a section of the path (116a) and hiding the remaining items (118a) of the active interaction level (112a), and
presenting the group of selectable items within a predetermined area, while moving the items (114a) of the active interaction level (112a) along the path (116a) into and out of the predetermined area in response to the control signal originating from the circular input element (108),
receiving data related to characteristics of media content and assembling the items of each interaction level (112a, 112b) according to the data, wherein the received data specifies newly added media or a group of media objects by specifying the characteristics of the media content,
adding in accordance with the received data new items to the active interaction level between the hidden items in order to allow navigation to the new media content.

10. The method according to claim 9, wherein the path is a closed path, in particular a revolving path, including one of a circular, elliptical, or polygonal path.

11. The method according to claim 9 or 10, said enabling (585) the next interaction level further comprises deactivating the active interaction level; activating the next enabled interaction level; and coupling (530) the next enabled interaction level to the input device.

12. The method according to one of the claims 9 to 11, further comprising, based on the focused item corresponding to a media content, initiating (590) rendering of the media content in response to a control signal originating from the linear input element, said initiating (590) comprising requesting streaming of a media stream based on the focused item corresponding to the media stream.

13. A computer program product comprising one or more computer-readable media having program code means stored thereon, wherein said program code means when installed and executed on a media player, cause the media player to perform a method according to one of the claims 9 to 12.

## Patentansprüche

1. Mittel zur Steuerung eines Media-Players zum Wiedergeben von Medieninhalten, aufweisend zwei oder mehr Interaktionsebenen (112a, 112b),
einschließlich einer aktiven Interaktionsebene (112a),
jede Interaktionsebene (112a, 112b) umfassend eine Mehrzahl von Einträgen (114a, 114b), die Eigenschaften von Mediertinhalten entsprechen,
wobei die Einträge (114a, 114b) zumindest einiger Interaktionsebenen (112a, 112b) auf einem kreisförmigen, elliptischen oder vieleckigen Pfad (116a, 116b) angeordnet sind,
wobei die aktive Interaktionsebene (112a) mit einer Eingabevorrichtung (106) gekoppelt ist,
welche, ein kreisförmiges Eingabeelement (108) und
ein lineares Eingabeelement (110) aufweist, und
eine vorgegebene Anzahl der Einträge der aktiven Interaktionsebene (112a) als eine Gruppe von auswählbaren Einträgen,
einschließlich eines hervorgehobenen Eintrags (120),
auf zumindest einem Abschnitt des Pfades (116a) bereitgestellt sind,
wobei die Mittel (104) so konfiguriert sind, dass die Gruppe von auswählbaren Einträgen angepasst werden kann durch
Entfernen einer Anzahl von Einträgen aus der Gruppe,
Hinzufügen einer entsprechenden Anzahl von Einträgen der aktiven Interaktionsebene zu der Gruppe, und
Ändern des hervorgehobenen Eintrags (120)
als Reaktion auf ein von dem kreisförmigen Eingabeelement (108) der Eingabevorrichtung (106) stammendes Steuersignal, und
wobei die Mittel ferner so konfiguriert sind, dass eine nächste (112b) der zwei oder mehr Interaktinnsebenen (112a, 112b)
als Reaktion auf ein von dem linearen Eingabeelement (110) der Eingabevorrichtung (106) stammendes Steuersignal und
basierend auf dem hervorgehobenen Eintrag (120) freigegeben wird, und wobei
die nächste freigegebene Interaktionsebene (112b) außerhalb der aktiven Interaktionsebene (112a) und diese umlaufend angeordnet ist, und wobei
die nächste freigegebene Interaktionsebene (112b) in Kombination mit der gerade aktiven Interaktionsebene (112a) dargestellt ist, wobei
nur die Einträge aus der Gruppe von auswählbaren Einträgen auf zumindest einem Abschnitt des Pfades (116a) dargestellt sind und
die übrigen Einträge (118a) der aktiven Interaktionsebene (112a) versteckt sind, und
wobei die Gruppe von auswählbaren Einträgen innerhalb einer vorgegebenen Fläche dargestellt ist, während die Einträge (114a) der aktiven Interaktionsebene (112a) als Reaktion auf das von dem kreisförmigen Eingabeelement (108) stammende Steuersignal entlang des Pfades (116a) in die vorgegebene Fläche hinein und aus dieser heraus bewegt werden, und wobei die Mittel (104) ferner dafür konfiguriert sind, auf Eigenschaften von Medieninhalten, bezogene Daten zu empfangen und die Einträge jeder Interaktionsebene (112a, 112b) entsprechend der Daten zusammenzustellen, wobei die empfangenen Daten durch Angabe der Eigenschaften der Medieninhalte neu hinzugefügte Medien oder eine Gruppe von Medienabjekten angeben, wobei entsprechend der empfangenen Daten zur aktiven Interaktionsebene neue Einträge zwischen den versteckten Einträgen hinzugefügt werden, um die Navigation zu den neuen Medieninhalten zu ermöglichen.

2. Mittel nach Anspruch 1, wobei der Pfad (116a, 116b) ein geschlossener Pfad ist, insbesondere ein sich drehender Pfad, einschließlich eines entweder kreisförmigen, elliptischen oder vieleckigen Pfades.

3. Mittel nach Anspruch 1 oder 2, wobei die aktive Interaktionsebene (112a) deaktiviert wird und die nächste freigegebene Interaktionsebene (112b) aktiviert und mit der Eingabevorrichtung (106) gekoppelt wird.

4. Mittel nach einem der vorangegangenen Ansprüche, ferner so konfiguriert, dass das Wiedergeben von Medieninhalten als Reaktion auf ein von dem linearen Eingabeelement (110) stammendes Steuersignal und basierend auf dem den Medieninhalten entsprechenden hervorgehobenen Eintrag (122) eingeleitet wird, wobei der hervorgehobene Eintrag (122) einem Media-Stream entspricht und die Mittel (104) ferner dazu konfiguriert sind, das Streaming des Media-Streams anzufordern.

5. Mittel nach einem der vorangegangenen Ansprüche, wobei das kreisförmigen Eingabeelement (108) der Eingabevorrichtung (106) eine Mehrzahl von einrastenden Stellungen umfasst, welche festen Ausrichtungen des kreisförmigen Eingabeelements (108) entsprechen, wobei eine Drehung des kreisförmigen Eingabeelements (108) aus einer einrastenden Stellung in eine benachbarte einrastende Stellung ein von dem kreisförmigen Eingabeelement (108) stammendes Steuersignal erzeugt.

6. Mittel nach einem der vorangegangenen Ansprüche, wobei das Steuersignal des kreisförmigen Eingabeelements (108) ferner auf die Umdrehungsgeschwindigkeit des kreisförmigen Eingabeelements (108) bezogene Daten umfasst, wobei die Anzahl der aus der Gruppe entfernten und zu dieser hinzugefügten Einträge auf Grundlage der Umdrehungsgeschwindigkeit so bestimmt wird, dass die Geschwindigkeit beim Ändern des hervorgehobenen Eintrags (120, 122) in der Gruppe von auswählbaren Einträgen der Umdrehungsgeschwindigkeit des kreisförmigen Eingabeelement (108) entspricht.

7. Media-Player zum Wiedergeben von Medieninhalten, enthaltend Mittel (104) nach einem der vorangegangenen Ansprüche, wobei der Media-Player (100) ferner einen Eingang zum Empfangen von durch die Eingabevorrichtung (106) erzeugten Steuersignalen und mindestens einen Ausgang zum Bereitstellen von Daten zum Wiedergeben von Medieninhalten umfasst.

8. Media-Player nach Anspruch 7, welcher ferner eine zum Empfangen von Medieninhalten von einem Server konfigurierte Netzwerkverbindung, eine zum Vorpuffern der Medieninhalte konfigurierte Speichervorrichtung und eine oder mehrere mit dem mindestens einen Ausgang zum Wiedergeben von Medieninhalten gekoppelte Ausgabevorrichtungen (102) umfasst, wobei die Eingabevorrichtung eine Fernbedienung ist, die Ausgabevorrichtungen (102) eine Anzeigevorrichtung enthalten und die Mittel (104) zur Steuerung als eine auf der Anzeigevorrichtung dargestellte graphische Benutzeroberfläche bereitgestellt sind.

9. Verfahren zum Steuern eines Media-Players zum Wiedergeben von Medieninhalten nach Anspruch 7 oder 8, umfassend die Verfahrensschritte:
Bereitstellen (510) von zwei oder mehr Interaktionsebenen, einschließlich einer aktiven Interaktionsebene, jede Interaktionsebene umfassend eine Mehrzahl von Einträgen, die Eigenschaften von Medieninhalten entsprechen;
Anordnen der Einträge zumindest einiger Interaktionsebenen auf einem kreisförmigen, elliptischen oder vieleckigen Pfad;
Koppeln (520) der aktiven Interaktionsebene mit einer Eingabevorrichtung, welche ein kreisförmiges Eingabeelement und ein lineares Eingabeelement aufweist;
Bereitstellen (530) einer vorgegebenen Anzahl der Einträge in der aktiven Interaktionsebene als eine Gruppe von auswählbaren Einträgen, einschließlich eines hervorgehobenen Eintrags, auf zumindest einem Abschnitt des Pfades;
Anpassen (560) der Gruppe von auswählbaren Einträgen durch Entfernen (562) einer Anzahl von Einträgen aus der Gruppe, Hinzufügen (564) einer entsprechenden Anzahl von Einträgen der aktiven Interaktionsebene zu der Gruppe und Ändern (566) des hervorgehobenen Eintrags als Reaktion (550) auf ein von dem kreisförmigen Eingabeelement der Eingabevorrichtung stammendes Steuersignal; und,
basierend auf dem hervorgehobenen Eintrag, Freigeben (585) einer nächsten der zwei oder mehr Interaktionsebenen als Reaktion (570) auf ein von dem linearen Eingabeelement der Eingabevorrichtung stammendes Steuersignal,
Bereitstellen (530) der nächsten der zwei oder mehr Interaktionsebenen und Bereitstellen einer vorgegebenen Anzahl von Einträgen in der nächsten Interaktionsebene und Anordnen dieser Einträge auf einem kreisförmigen, elliptischen oder vieleckigen Pfad außerhalb der aktiven Interaktionsebene und diese umlaufend,
Darstellen nur der Einträge aus der Gruppe von auswählbaren Einträgen auf zumindest einem Abschnitt des Pfades (116a) und Verstecken der übrigen Einträge (118a) der aktiven Interaktionsebene (112a), und
Darstellen der Gruppe von auswählbaren Einträgen innerhalb einer vorgegebenen Fläche, während die Einträge (114a) der aktiven Interaktionsebene (112a) als Reaktion auf das von dem kreisförmigen Eingabeelement (108) stammende Steuersignal entlang des Pfades (116a) in die vorgegebene Fläche hinein und aus dieser heraus bewegt werden,
Empfangen von auf Eigenschaften von Medieninhalten bezogenen Daten und Zusammenstellen der Einträge jeder Interaktionsebene (112a, 112b) entsprechend der Daten, wobei die empfangenen Daten durch Angabe der Eigenschaften der Medieninhalte neu hinzugefügte Medien oder eine Gruppe von Medienobjekten angeben,
Hinzufügen neuer Einträge zur aktiven Isiteraktionsebene zwischen den versteckten Einträgen entsprechend der empfangenen Daten, um die Navigation zu den neuen Medieninhalten zu ermöglichen.

10. Verfahren nach Anspruch 9, wobei der Pfad ein geschlossener Pfad ist, insbesondere ein sich drehender Pfad, einschließlich eines entweder kreisförmigen, elliptischen oder vieleckigen Pfades.

11. Verfahren nach Anspruch 9 oder 10, wobei das Freigeben (585) der nächsten Interaktionsebene ferner umfasst: Deaktivieren der aktiven Interaktionsebene; Aktivieren der nächsten freigegebenen Interaktionsebene; und Koppeln (530) der nächsten freigegebenen Interaktionsebene mit der Eingabevorrichtung.

12. Verfahren nach einem der Ansprüche 9 bis 11, ferner umfassend, basierend auf dem einem Medienitahalt entsprechenden hervorgehobenen Eintrag, Einleiten (590) des Wiedergebens von Medieninhalten als Reaktion auf ein von dem linearen Eingabeelement stammendes Steuersignal, wobei das Einleiten (590) das Anfordern des Streamings eines Media-Streams umfasst, basierend auf dem hervorgehobenen Eintrag, der dem Media-Stream entspricht.

13. Computerprogramm-Produkt, umfassend ein oder mehrere computerlesbare Medien mit darauf gespeicherten Programmcode-Mitteln, wobei die Programmcode-Mittel nach Installation und Ausführung auf einem Media-Player bewirken, dass der Media-Player ein Verfahren nach einem der Ansprüche 9 bis 12 ausführt.

## Revendications

1. Moyen de commande d'un lecteur multimédia pour le rendu d'un contenu multimédia, avec deux ou plusieurs niveaux d'interaction (112a, 112b)
comportant un niveau d'interaction actif (112a),
chaque niveau d'interaction (112a, 112b) comprenant une pluralité d'éléments (1 14a, 114b) correspondant à des caractéristiques du contenu multimédia,
les éléments (114a, 114b) d'au moins quelques-uns des niveaux d'interaction (112a, 112b) étant disposés sur un chemin circulaire, elliptique ou polygonal (116a, 116b),
où le niveau d'interaction actif (112a) est relié à un dispositif d'entrée (106)
pourvu d'un élément d'entrée circulaire (108) et
d'un élément d'entrée linéaire (114), et où
un nombre défini d'éléments du niveau d'interaction actif (112a) sont prévus en tant que groupe d'éléments sélectionnables
comprenant un élément ciblé (120)
sur au moins une section du chemin (116a),
ledit moyen (104) étant prévu pour modifier le groupe d'éléments sélectionnables par retrait d'un certain nombre d'éléments du groupe,
ajout au groupe d'un nombre d'éléments respectif du niveau d'interaction actif, et changement de l'élément ciblé (120)
en réaction à un signal de commande provenant de l'élément d'entrée circulaire (108) du dispositif d'entrée (106), et
ledit moyen étant en outre prévu pour valider un niveau suivant (112b) des deux ou des plusieurs niveaux d'interaction (112a, 112b)
en réaction à un signal de commande provenant de l'élément d'entrée linéaire (110) du dispositif d'entrée (106) et
basé sur l'élément ciblé (120), et
le niveau d'interaction (112b) validé suivant est disposé à la circonférence et à l'extérieur du niveau d'interaction actif (112a), et où
le niveau d'interaction (112b) validé suivant est présenté en combinaison avec le niveau d'interaction actif (112a) actuel, où
seuls les éléments du groupe d'éléments sélectionnables sont présentés sur au moins une section du chemin (116a) et
les éléments (118a) restants du niveau d'interaction actif (112a) sont masqués, et où le groupe d'éléments sélectionnables est présenté à l'intérieur d'une surface définie, les éléments (114a) du niveau d'interaction actif (112a) étant déplacés le long du chemin (116a) vers et en dehors de la surface définie en réaction au signal de commande provenant de l'élément d'entrée circulaire (108), et où
le moyen (104) est en outre prévu pour recevoir des données relatives aux caractéristiques du contenu multimédia et pour assembler les éléments de chaque niveau d'interaction (112a, 112b) en fonction des données, les données reçues spécifiant un support nouvellement ajouté ou un groupe d'objets multimédia par spécification des caractéristiques du contenu multimédia, de nouveaux éléments étant ajoutés au niveau d'interaction actif entre les éléments masqués en fonction des données reçues, pour permettre la navigation vers le nouveau contenu multimédia.

2. Moyen selon la revendication 1, où le chemin (116a, 116b) est un chemin fermé, en particulier un chemin tournant, constitué d'un chemin circulaire, ou d'un chemin elliptique, ou d'un chemin polygonal.

3. Moyen selon la revendication 1 ou la revendication 2, où le niveau d'interaction actif (112a) est désactivé et où le niveau d'interaction (112b) validé suivant est activé et relié au dispositif d'entrée (106).

4. Moyen selon l'une des revendications précédentes, prévu en outre pour lancer le rendu du contenu multimédia en réaction un signal de commande provenant de l'élément d'entrée linéaire (110) et basé sur l'élément ciblé (122) correspondant au contenu multimédia, l'élément ciblé (122) correspondant un flux multimédia et le moyen (104) étant en outre prévu pour demandeur la diffusion en streaming du flux multimédia.

5. Moyen selon l'une des revendications précédentes, où l'élément d'entrée circulaire (108) du dispositif d'entrée (106) comprend une pluralité de positions d'enclenchement correspondant à des orientations fixes de l'élément d'entrée circulaire (108), une rotation de l'élément d'entrée circulaire (108) d'une position d'enclenchement vers une position d'enclenchement adjacente générant un signal de commande provenant de l'élément d'entrée circulaire (108).

6. Moyen selon l'une des revendications précédentes, où le signal de commande de l'élément d'entrée circulaire (108) comprend en outre des données relatives à la vitesse de rotation de l'élément d'entrée circulaire (108), le nombre d'éléments retirés du groupe et ajouté à celui-ci étant déterminé sur la base de la vitesse de rotation, de sorte que la vitesse de changement de l'élément ciblé (120, 122) dans le groupe d'éléments sélectionnables correspond à la vitesse de rotation de l'élément d'entrée circulaire (108).

7. Lecteur multimédia pour le rendu d'un contenu multimédia, comportant un moyen (104) selon l'une des revendications précédentes, ledit lecteur multimédia (100) comprenant en outre une entrée destinée à recevoir des signaux de commande générés par le dispositif d'entrée (106) et au moins une sortie destinée à délivrer des données pour le rendu du contenu multimédia.

8. Lecteur multimédia selon la revendication 7, comprenant en outre une connexion de réseau prévue pour recevoir un contenu multimédia d'un serveur, un dispositif de stockage prévu pour stocker en mémoire tampon le contenu multimédia, et un ou plusieurs dispositifs de sortie (102) reliés à ladite au moins une sortie pour restituer le contenu multimédia, le dispositif d'entrée étant une télécommande, les dispositifs de sortie (102) comprenant un dispositif d'affichage et le moyen (104) de commande étant prévu comme interface graphique d'utilisateur visionnée sur le dispositif d'affichage.

9. Procédé de commande d'un lecteur multimédia pour le rendu d'un contenu multimédia selon la revendication 7 ou la revendication 8, comprenant les étapes suivantes :
la mise à disposition (510) de deux ou de plusieurs niveaux d'interaction comportant un niveau d'interaction actif, chaque niveau d'interaction comprenant une pluralité d'éléments correspondant à des caractéristiques du contenu multimédia ;
la disposition des éléments d'au moins quelques-uns des niveaux d'interaction sur un chemin circulaire, elliptique ou polygonal ;
la liaison (520) du niveau d'interaction actif à un dispositif d'entrée pourvu d'un élément d'entrée circulaire et d'un élément d'entrée linéaire ;
la mise à disposition (530) dans le niveau d'interaction actif d'un nombre défini d'éléments en tant que groupe d'éléments sélectionnables comprenant un élément ciblé sur au moins une section du chemin ;
la modification (560) du groupe d'éléments sélectionnables par retrait (562) d'un certain nombre d'éléments du groupe, ajout (564) d'un nombre respectif d'éléments du niveau d'interaction actif au groupe, et changement (566) de l'élément ciblé en réaction (550) à un signal de commande provenant de l'élément d'entrée circulaire du dispositif d'entrée ; et
sur la base de l'élément ciblé, validation (585) d'un niveau suivant des deux ou des plusieurs niveaux d'interaction en réaction (570) à un signal de commande provenant de l'élément d'entrée linéaire du dispositif d'entrée ;
la mise à disposition (530) du niveau suivant des deux ou des plusieurs niveaux d'interaction et la mise à disposition dans le niveau d'interaction suivant d'un certain nombre d'éléments définis, et la disposition de ces éléments sur un chemin circulaire,
elliptique ou polygonal à la circonférence et à l'extérieur du niveau d'interaction actif,
la présentation des seuls éléments du groupe d'éléments sélectionnables sur au moins une section du chemin (116a) et le masquage des éléments (118a) restants du niveau d'interaction actif (112a), et la présentation du groupe d'éléments sélectionnables à l'intérieur d'une surface définie, les éléments (114a) du niveau d'interaction actif (112a) étant déplacés le long du chemin (116a) vers et en dehors de la surface définie en réaction au signal de commande provenant de l'élément d'entrée circulaire (108),
la réception de données relatives à des caractéristiques du contenu multimédia et
l'assemblage des éléments de chaque niveau d'interaction (112a, 112b) en fonction des données, les données reçues spécifiant un support nouvellement ajouté ou un groupe d'objets multimédia par spécification des caractéristiques du contenu multimédia,
l'ajout de nouveaux éléments au niveau d'interaction actif entre les éléments masqués en fonction des données reçues, pour permettre la navigation vers le nouveau contenu multimédia.

10. Procédé selon la revendication 9, où le chemin est un chemin fermé, en particulier un chemin tournant, constitué d'un chemin circulaire, ou d'un chemin elliptique, ou d'un chemin polygonal.

11. Procédé selon la revendication 9 ou la revendication 10, où la validation (585) du niveau d'interaction suivant comprend en outre la désactivation du niveau d'interaction actif ; l'activation du niveau d'interaction validé suivant et la liaison (530) du niveau d'interaction validé suivant au dispositif d'entrée.

12. Procédé selon l'une des revendications 9 à 11, comprenant en outre, sur la base de l'élément ciblé correspondant à un contenu multimédia, la lancement (590) de le rendu du contenu multimédia en réaction à un signal de commande provenant de l'élément d'entrée linéaire, ledit lancement (590) comprenant la demande de diffusion en streaming d'un flux multimédia basé sur l'élément ciblé correspondant au flux multimédia.

13. Produit de programme informatique comprenant un ou plusieurs supports lisibles par ordinateur où sont stockés des moyens de code de programme, lesdits moyens de code de programme entraînant l'exécution par un lecteur multimédia d'un procédé selon l'une des revendications 9 à 12, une fois installés et exécutés sur le lecteur multimédia.
